# EUROPÄISCHE PATENTSCHRIFT

(11) **EP 1 243 453 B1**
(45) Veröffentlichungstag und Bekanntmachung des Hinweises auf die Patenterteilung: **14.04.2004**
(21) Anmeldenummer: 01130576.0
(22) Anmeldetag: 21.12.2001
(51) Int. Cl.: B60J 7/12, B60J 1/18

(54) **Verdeck für ein Kraftfahrzeug**
Soft top for vehicle
Toit de véhicule

(30) Priorität: 23.03.2001 DE 10114417
(43) Veröffentlichungstag der Anmeldung: 25.09.2002
(73) Patentinhaber: Dr.Ing. h.c.F. Porsche Aktiengesellschaft, 70435 Stuttgart (DE)
(72) Erfinder: Fischer, Thomas, 72074 Tübingen (DE)

(56) Entgegenhaltungen:
- EP-A- 1 040 949
- EP-A- 1 059 184
- DE-A- 4 341 079
- DE-U- 29 605 684
- US-A- 6 102 467

## Beschreibung

Die Erfindung geht aus von einem Verdeck für ein Kraftfahrzeug, gemäß Oberbegriff des Anspruchs 1.

Aus der gattungsbildenden DE 43 41 079 A1 ist ein Verdeck für ein Kraftfahrzeug ersichtlich, welches Verdeck üblicherweise ein aufbauseitig angelenktes Verdeckgestänge aufweist, an dem ein Verdeckbezug befestigt ist. Der Verdeckbezug umfasst einen äußeren Verdeckstoff und einen einem Fahrzeuginnenraum zugewandten Innenhimmel. Ferner ist in den Verdeckbezug eine Heckscheibe eingesetzt und mit dem Verdeckbezug verbunden. Hierfür ist eine Schraubverbindung vorgesehen, die einerseits an einem Scheibenrahmen der Heckscheibe und andererseits an dem Verdeckbezug angreift. Die Schraubverbindung liegt zwischen dem an dem Scheibenrahmen befestigten Innenhimmel und dem äußeren Verdeckstoff. Um ein Scheuern des Innenhimmels an der Schraubverbindung zu vermeiden, ist an der Längsseite des Scheibenrahmens ein Abstandhalter zwischen Scheibenrahmen und Innenhimmel angeordnet.

Ein weiteres Verdeck für ein Kraftfahrzeug ist aus der DE 196 22 953 C1 bekannt. Es besitzt ein Verdeckgestänge, welches mit einem Verdeckbezug ausgestattet ist, der einen äußeren Verdeckstoff und einen Innenhimmel aufweist, der dem Fahrzeuginnenraum zugewandt ist. Ferner ist eine Heckscheibe in den Verdeckbezug eingesetzt und mit diesem verbunden. Bei dem bekannten Verdeck ist die aus Folie hergestellte Scheibe an dem Verdeckbezug festgenäht. Dieses Verdeck hat sich in der Praxis gut bewährt, dennoch ist eine Verbesserung möglich.

Die DE 296 05 684 U1 beschreibt eine starre Heckscheibe, die über einen Scheibenrahmen mit einem äußeren Verdeckstoff eines Verdecks verbunden ist.

Aufgabe der Erfindung ist es, ein Verdeck der gattungsbildenden Art zu schaffen, welches über seine Lebensdauer einem verringerten Verschleiß unterliegt.

Gelöst wird diese Aufgabe mit einem Verdeck, welches die in Anspruch 1 genannten Merkmale umfasst. Weitere, die Erfindung vorteilhaft ausgestaltende Merkmale beinhalten die Unteransprüche.

Die mit der Erfindung hautsächlich erzielten Vorteile sind darin zu sehen, dass bei der Bewegung des Verdecks zum Ablegen in einen Verdeckkasten und umgekehrt der Randbereich des Innenhimmels, welcher auf dem Scheibenrahmen zu liegen kommt, nicht durch Scheuern, beispielsweise an übrigen Verdeckteilen oder an einem Boden des Ablagekastens, beschädigt wird, da der erfindungsgemäße Scheuerschutz dem Fahrzeuginnenraum zugewandt ist.

Die Erfindung wird nachfolgend anhand von Ausführungsbeispielen mit Bezug auf die Zeichnung näher erläutert.

Es zeigen:
- Fig. 1: eine perspektivische Ansicht eines teilweise dargestellten Fahrzeugs mit einem Verdeck in Schließstellung,
- Fig. 2: ein erstes Ausführungsbeispiel des Verdecks im Teilschnitt entlang Linie II - II in Fig. 1 und
- Fig. 3+4: jeweils ein weiteres Ausführungsbeispiel eines Verdecks im Teilschnitt.

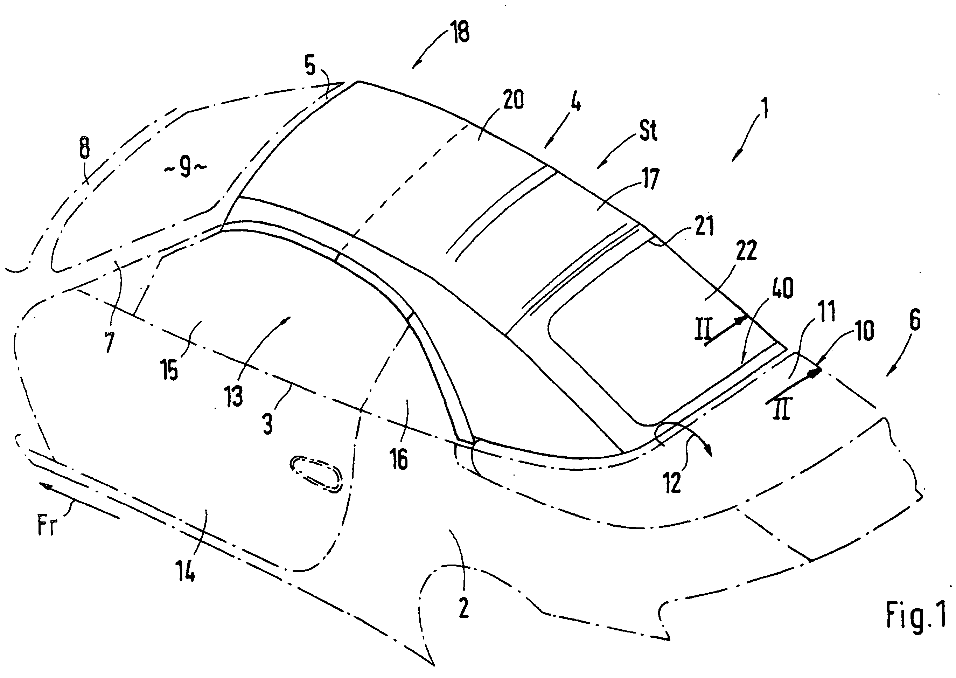

Von dem in Fig. 1 dargestellten Kraftfahrzeug 1, insbesondere Personenwagen, ist ein Fahrzeugaufbau 2 und ein oberhalb einer Gürtellinie 3 angeordnetes Verdeck 4, insbesondere Stoffverdeck, gezeigt, welches Verdeck 4 sich in Schließstellung St zwischen einem oberen Windschutzscheibenrahmenquerteil 5 und einer Heckpartie 6 des Fahrzeugs 1 erstreckt An dem Windschutzscheibenrahmenquerteil 5 sind Rahmenlängsteile 7 angebunden, die bis zu einem Windlauf 8 reichen, so dass ein Windschutzscheibenrahmen gebildet ist, der eine Windschutzscheibe 9 umgibt

In der Heckpartie 6 ist ein Verdeckablagekasten 10 vorgesehen, der zumindest teilweise von einem Verdeckkastendeckel 11 verschlossen wird. Für ein Ablegen des Verdecks 4 in den Verdeckablagekasten 10 ist vorgesehen, den Verdeckkastendeckel 11 schwenkbar in Pfeilrichtung 12 zu öffnen. Bei abgelegtem Verdeck wird der Verdeckkastendeckel 11 entgegen Pfeilrichtung 12 wieder verschlossen. Soll das Verdeck 4 wieder in Schließstellung St gebracht werden, wird zunächst der Verdeckkastendeckel 11 geöffnet, nachfolgend das Verdeck 4 in Schließstellung St bewegt und schließlich der Verdeckkastendeckel 11 wieder geschlossen.

Ein Fahrzeuginnenraum 13 des im Ausführungsbeispiel zwei+zwei-sitzig ausgebildeten Personenwagens ist über seitliche Türen 14 zugänglich, wobei diese Türen 14 oberhalb der Gürtellinie 3 rahmenlos ausgebildete und versenkbare Türfensterscheiben 15 aufweisen. An die Türfensterscheiben 15 grenzen ebenfalls versenkbar ausgebildete Fondseitenscheiben 16 an, die - in Fahrtrichtung Fr gesehen - hinter den Türfensterscheiben 15 liegen.

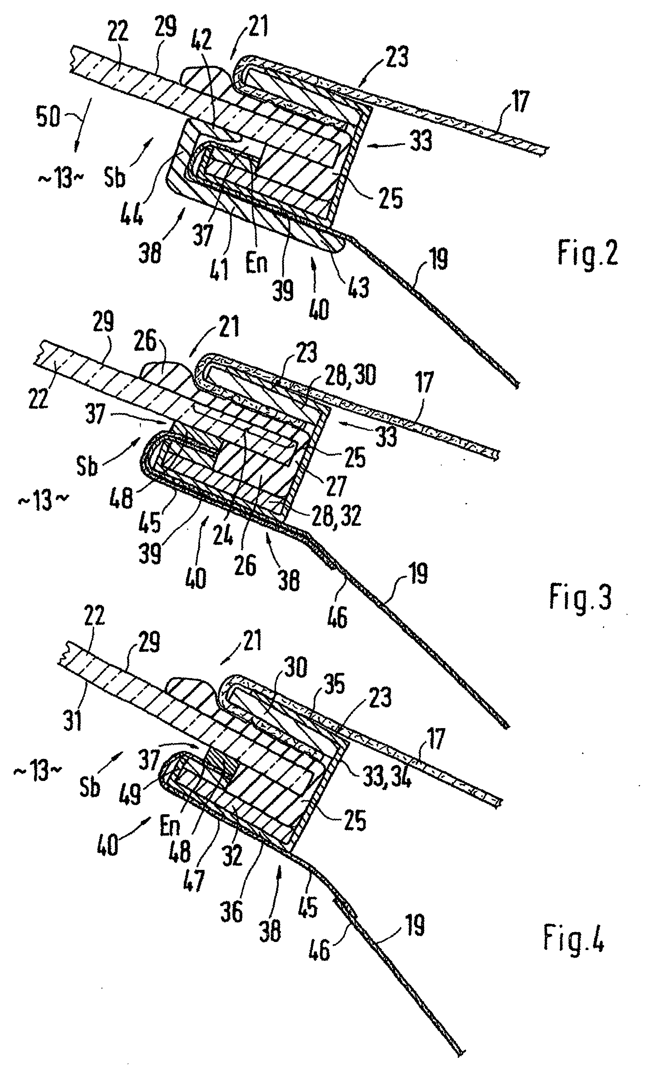

Das Verdeck 4 besitzt ein hier nicht dargestelltes Verdeckgestänge, welches an einem aufbauseitigen Verdecklager (nicht gezeigt) angelenkt ist. Außerdem umfasst das Verdeck 4 einen außen auf dem Gestänge liegenden Verdeckstoff 17, der sich über einen vorderen starren Verdeckteil 18 bis zur Heckpartie 6 erstreckt. An der Innenseite des Verdeckgestänges liegt ein Innenhimmel 19 (Fig. 2), der mit dem Verdeckstoff 17 den Verdeckbezug 20 des Verdecks 4 bildet. Sowohl der Verdeckstoff 17 als auch der Innenhimmel 19 können aus einem flexiblen Textilstoff hergestellt sein. In den Verdeckbezug 20 ist eine Öffnung 21 eingebracht, in die eine Heckscheibe 22 eingesetzt ist, die aus einem flexiblen oder starren Material hergestellt sein kann und beispielsweise als Glasscheibe oder Kunststoffscheibe realisiert ist. Diese Scheibe kann auch bis zu einer gewissen Belastung formstabil oder bereichsweise starr und/oder formstabil sein. Denkbar wäre es auch, eine Folie zu verwenden. Die Heckscheibe 22 ist in bevorzugter Ausführungsform mit einem umlaufenden mehrteiligen Scheibenrahmen 23 versehen, der im Wesentlichen starr ausgebildet und mit dem Verdeckbezug 20 verbunden ist, worauf nachfolgend mit Bezug auf die Fig. 2 bis 4 eingegangen wird.

Der mehrteilige Scheibenrahmen 23 der Heckscheibe 22 umfasst eine um den Rand 24 der Scheibe 22 gelegte Dichtung 25, die im Querschnitt U - förmig ausgebildet ist und somit zwei Dichtschenkel 26 und eine Dichtbasis 27 aufweist. Zwischen den Dichtschenkeln 26 kommt die Heckscheibe 22 zu liegen. Der Scheibenrahmen 23 umfasst ferner einen mehrteiligen Dichtungsrahmen 28, der einen der Heckscheibenaußenseite 29 zugeordneten ersten Rahmenteil 30 und einen der Heckscheibeninnenseite 31 zugeordneten zweiten Rahmenteil 32 aufweist. Der Dichtungsrahmen 28 liegt auf den Dichtschenkeln 26 auf. Um den Dichtungsrahmen 28 und die Dichtung 25 an dem Rand 24 der Heckscheibe 22 zu fixieren, ist eine Befestigungseinrichtung 33 vorgesehen, die die Dichtung 25 und die Rahmenteile 30 und 32 zusammenhält und auf die Heckscheibe 22 drückt, beispielsweise durch Federkraft. Die Befestigungseinrichtung 33 kann als Klemmeinrichtung realisiert sein und beispielsweise mehrere U - förmige Klammern 34 umfassen, die über den Umfang des Scheibenrahmens 23 verteilt angeordnet sind und auf den Dichtungsrahmen 28 mit ihren Klammerschenkeln 35 und 36 aufgesteckt werden. Der Klammerschenkel 35 liegt mithin auf dem Rahmenteil 30 und der Klammerschenkel 36 auf dem Rahmenteil 32 auf.

Für die Verbindung des Verdeckstoffs 17 und des Innenhimmels 19 mit dem Scheibenrahmen 23 ist vorgesehen, den Verdeckstoff 17 um den ersten Rahmenteil 30 des Dichtungsrahmens 28 zu legen und zwischen der Dichtung 25 und dem Dichtungsrahmen 28 festzuklemmen. Entsprechendes gilt für den Innenhimmel 19, der um den Rahmenteil 32 gelegt ist.

Der an der Scheibeninnenseite 31 liegende Schenkel 26 der Dichtung 25 ist etwas kürzer ausgebildet als der Schenkel 36 der Klammer 34 und als das Rahmenteil 32, so dass zwischen Rahmenteil 32 und Scheibeninnenseite 31 eine Aufnahme 37 ausgebildet ist, in der ein Scheuerschutz 38 festgelegt ist, der den einen Scheibenausschnitt Sb umgebenden Randbereich 39 des Innenhimmels 19 zumindest teilweise überdeckt bzw. übergreift und so vor Beschädigung durch Scheuern schützt, wenn das Verdeck 4 zum Ablegen in dem Verdeckablagekasten 10 entspannt wird, wodurch die Scheibe 22 in Pfeilrichtung 50 (Fig. 2) nach unten fällt. Der Scheuerschutz 38 ist zumindest an der inneren unteren Längsseite 40 der Scheibe 22 bzw. des Scheibenrahmens 23 vorgesehen und ist dem Fahrzeuginnenraum 13 zugewandt. In einer ersten Ausführungsform gemäß Fig. 2 ist der Scheuerschutz 38 als an den Scheibenrahmen 23 ansetzbare Scheuerleiste 41 realisiert, die im Querschnitt U - förmig sein und zwei unterschiedlich lange Leistenabschnitte 42 und 43 aufweisen kann, die im Wesentlichen parallel zueinander verlaufen und über eine Leistenbasis 44 miteinander verbunden sind. Ferner kann die Scheuerleiste 41 aus Kunststoff hergestellt sein. Über den Leistenabschnitt 42 ist die Scheuerleiste 41 an dem Scheibenrahmen 23 gehalten, insbesondere durch Klemmung in der Aufnahme 37 festgelegt. Außerdem kann durch diese Klemmung auch das den Scheibenausschnitt Sb begrenzende Ende En des Innenhimmels 19 in der Aufnahme 37 gehalten sein.

An Stelle der Scheuerleiste 41 oder zusätzlich kann als Scheuerschutz 38 auch ein Schutzstreifen 45 aus Leder-, Kunstleder oder dgl. vorgesehen sein, der gemäß einem zweiten Ausführungsbeispiel nach Fig. 3 an dem Innenhimmel 19 diesen überlappend befestigt ist oder entsprechend einem in Fig. 4 dargestellten dritten Ausführungsbeispiel dessen Randbereich 39 bildet. Der Scheuerschutz 38 ist mit einer Breite ausgeführt derart, dass er an dem Scheibenrahmen 23 klemmend gehalten werden kann und zumindest den Klammerschenkel 36 bzw. den zweiten Rahmenteil 32 abdeckt. Der rechteckige bzw. an die Form der Heckscheibe 22 angepasste Scheibenausschnitt Sb des Innenhimmels 19 ist also etwas kleiner als die Länge und Breite der Heckscheibe 22 ausgeschnitten.

Der Streifen 45 nach Fig. 3 ist auf der dem Fahrzeuginnenraum 13 zugewandten Innenseite 46 des Innenhimmels 19 befestigt, beispielsweise durch Nähen oder Kleben. Der in Fig. 4 dargestellte Streifen 45 hingegen bildet einen Fortsatz 47 des Innenhimmels 19. Um den Streifen 45 in der Aufnahme 37 zu befestigen, kann ein Haltelement 48 in die Aufnahme 37 eingebracht sein, welches Haltelement 48 den Streifen 45 dort festlegt. Denkbar wäre es allerdings auch, den Streifen 45 an dem zweiten Rahmenteil 32 und/oder an der Klemmeinrichtung 33 anzubinden, beispielsweise durch Klebung. Möglich ist es jedoch auch, den Innenhimmel 19 zwischen der Klemmeinrichtung 33 und dem zweiten Rahmenteil 32 zu halten.

Aus den Fig. 2 bis 4 ist noch ersichtlich, dass die Klammer 34 an ihrem Klammerschenkel 36 einen abgebogenen Klammerfortsatz 49 aufweist, der den zweiten Rahmenteil 32 übergreift und so gegen Verrutschen sichert.

## Patentansprüche

1. Verdeck (4) für ein Kraftfahrzeug (1), mit einem an einem aufbauseitig angelenkten Verdeckgestänge befestigten Verdeckbezug (20), der einen äußeren Verdeckstoff (17) und einen einem Fahrzeuginnenraum (13) zugewandten Innenhimmel (19) aufweist, in welchen Verdeckbezug (20) eine Heckscheibe (22) eingesetzt und mit dem Verdeckbezug (20) verbunden ist, welche Heckscheibe (22) einen Scheibenrahmen (23) besitzt, an dem der Innenhimmel (19) befestigt ist, wobei wenigstens an der inneren unteren Längsseite (40) des Scheibenrahmens (23) ein Scheuerschutz (38, 41, 45) für den Innenhimmel (19) angeordnet ist, **dadurch gekennzeichnet, dass** der Scheuerschutz (38) dem Fahrzeuginnenraum (13) zugewandt ist.

2. Verdeck nach Anspruch 1, **dadurch gekennzeichnet, dass** der Scheuerschutz (38) als Scheuerleiste (41) ausgebildet ist, die den Innenhimmel (19) an der unteren Längsseite (40) des Scheibenrahmens wenigstens bereichsweise übergreift.

3. Verdeck nach Anspruch 2, **dadurch gekennzeichnet, dass** die Scheuerleiste (41) zwischen Heckscheibe (22) und Scheibenrahmen (23) festgelegt ist.

4. Verdeck nach Anspruch 1, **dadurch gekennzeichnet, dass** der Innenhimmel (19) einen Scheibenausschnitt (Sb) besitzt und dass im Bereich des diesen Scheibenausschnitt (Sb) umgebenden Randbereichs (39) des Innenhimmels (19) als Scheuerschutz (38) ein Schutzstreifen (45) vorgesehen ist.

5. Verdeck nach Anspruch 4, **dadurch gekennzeichnet, dass** der Schutzstreifen (45) an dem Scheibenrahmen (23) befestigt ist.

6. Verdeck nach Anspruch 4 oder 5, **dadurch gekennzeichnet, dass** der Schutzsteifen (45) an dem Innenhimmel (19) befestigt ist.

7. Verdeck nach Anspruch 4, 5 oder 6, **dadurch gekennzeichnet, dass** der Schutzstreifen (45) aus Leder oder Kunstleder hergestellt ist.

8. Verdeck nach Anspruch 2, **dadurch gekennzeichnet, dass** die Scheuerleiste (41) aus Kunststoff hergestellt ist.

## Claims

1. A soft top (4) for a motor vehicle (1), with a soft-top covering (20) which is fastened to a soft-top linkage articulated to the body and which [covering (20)] has an external soft-top material (17) and an internal ceiling lining (19) facing a vehicle interior (13), a rear window (22) being inserted into the said soft-top covering (20) and being joined to the soft-top covering (20), which rear window (22) has a window frame (23) to which the internal ceiling lining (19) is fastened, wherein a scuff protection (38, 41, 45) for the internal ceiling lining (19) is arranged at least on the inner lower longitudinal side (40) of the window frame (23), **characterized in that** the scuff protection (38) faces the vehicle interior (13).

2. A soft top according to Claim 1, **characterized in that** the scuff protection (38) is designed in the form of a scuff moulding (41) which engages over the internal ceiling lining (19) on the lower longitudinal side (40) of the window frame (23) at least in part.

3. A soft top according to Claim 2, **characterized in that** the scuff moulding (41) is fixed between the rear window (22) and the window frame (23).

4. A soft top according to Claim 1, **characterized in that** the internal ceiling lining (19) has a window cut-out (Sb), and a protective strip (45) is provided as a scuff protection (38) in the region of the edge region (39) of the internal ceiling lining (19) surrounding the said window cut-out (Sb).

5. A soft top according to Claim 4, **characterized in that** the protective strip (45) is fastened to the window frame (23).

6. A soft top according to Claim 4 or 5, **characterized in that** the protective strip (45) is fastened to the internal ceiling lining (19).

7. A soft top according to Claim 4, 5 or 6, **characterized in that** the protective strip (45) is made of leather or synthetic leather.

8. A soft top according to Claim 2, **characterized in that** the scuff moulding (41) is made of plastics material.

## Revendications

1. Capote (4) pour un véhicule automobile (1), comportant un revêtement de capote (20) fixé à une tringlerie de capote articulée côté carrosserie, lequel revêtement comporte une étoffe de capote (17) extérieure et un habillage de plafond (19) tourné vers l'habitacle (13) du véhicule, une vitre arrière (22) est insérée dans le revêtement de capote (20) et reliée à celui-ci, laquelle vitre arrière (22) possède un cadre de vitre (23) auquel est fixée l'habillage de plafond (19), une protection contre les frottements (38, 41, 45) destinée à l'habillage de plafond (19) étant disposée au moins sur le côté longitudinal (40) inférieur et intérieur du cadre de vitre (23), **caractérisée en ce que** la protection contre les frottements (38) est tournée vers l'habitacle (13) du véhicule.

2. Capote selon la revendication 1, **caractérisée en ce que** la protection contre les frottements (38) est réalisée en tant que plinthe (41) qui passe au moins par endroits sur l'habillage de plafond (10), sur le côté longitudinal inférieur (40) du châssis de la vitre.

3. Capote selon la revendication 2, **caractérisée en ce que** la plinthe (41) est fixée entre la vitre arrière (22) et le châssis de vitre (23).

4. Capote selon la revendication 1, **caractérisée en ce que** l'habillage de plafond (19) possède une découpe (Sb) pour la vitre, et **en ce que** dans la région de la zone de bordure (39) entourant cette découpe (Sb) pour la vitre, de l'habillage de plafond (19), une bande de protection (45) est prévue comme protection contre les frottements (38).

5. Capote selon la revendication 4, **caractérisée en ce que** la bande de protection (45) est fixée au châssis de vitre (23).

6. Capote selon la revendication 4 ou 5, **caractérisée en ce que** la bande de protection (45) est fixée à l'habillage de plafond (19).

7. Capote selon la revendication 4, 5 ou 6, **caractérisée en ce que** la bande de protection (45) est réalisée en cuir ou en cuir synthétique.

8. Capote selon la revendication 2, **caractérisée en ce que** la plinthe (41) est réalisée en matière plastique.
